# EUROPEAN PATENT SPECIFICATION

(11) **EP 1 747 742 B1**
(45) Date of publication and mention of the grant of the patent: **10.09.2008**
(21) Application number: 06253891.3
(22) Date of filing: 25.07.2006
(51) Int. Cl.: A47J 31/057, A47J 31/46, A47J 31/50, A47J 31/44

(54) **Beverage maker**
Getränkezubereitungsvorrichtung
Appareil de préparation de boisson

(30) Priority: 25.07.2005 JP 2005214721; 16.05.2006 JP 2006136510
(43) Date of publication of application: 31.01.2007
(73) Proprietor: IZUMI PRODUCTS COMPANY, Matsumoto, Nagano (JP)
(72) Inventor: Takizawa, Hiroyuki, Matsumoto Nagano (JP); Furuhata, Shinichi, Matsumoto Nagano (JP); Kashiwabara, Shuhei, Matsumoto Nagano (JP); Ohno, Hiroki, Matsumoto Nagano (JP)
(74) Representative: Jenkins, Peter David

(56) References cited:
- EP-A- 1 530 940
- WO-A-03/092456
- WO-A2-20/05044065
- US-A1- 2004 118 299

## Description

### BACKGROUND OF THE INVENTION

### 1. Field of the Invention

The present invention relates to a beverage maker for pouring hot water into a beverage extraction funnel into which coffee powder or the like has been placed and extracting an extract liquid such as coffee liquid.

### 2. Description of the Related Art

Coffee makers, which use so-called regular coffee, of a drip type in which hot water at high temperature is poured into a coffee funnel into which coffee powder has been placed, the coffee is extracted, and the dripped coffee liquid is collected, such as a drip type that uses a paper filter, for example, are commonly known.

Japanese Patent Application Laid-Open (Kokai) No. 2005-143702and document EP-1530940 show a beverage maker which pours hot water by rotating a scatter that disperses and pours hot water above a coffee extraction funnel. The scatter here is shaped as a bottomed cylinder having a bottom surface that is horizontal and flat, with a plurality of drip holes formed in the bottom surface, wherein the hot water is poured in from above the center of that scatter.

Japanese Utility Model Application Laid-Open (Kokai) No. S52-204528 discloses a beverage maker in which a ring-shaped peripheral hot water-discharging part (16), and a center hot water-discharging part (18) enclosed by that peripheral hot water-discharging part (16), are provided in a scatter (hot water-discharge case (14) that makes one rotation. In this beverage maker, the center hot water-discharging part (18) is caused to bulge out in the circumferential direction of the peripheral hot water-discharging part (16), and the pour-out port (open end (9)) of a hot water supply pipe (hot water lifting tube (8)) is provided above the peripheral hot water-discharging part (16). While the scatter is rotating, hot water is poured into the peripheral hot water-discharging part (16), and hot water is dripped near the periphery of an extraction funnel (coffee basket (11)); and, when the rotation of the scatter has ended, hot water is poured from the pour-out port into the central hot water-discharge part (16), and hot water is dripped in the vicinity of the center of the extraction funnel.

In Japanese Utility Model Application Publication (Kokoku) No. S51-45433, a beverage maker is disclosed in which a scatter (boiling water disperser (15)) is provided above an extraction funnel (coffee powder vessel (11)). In this beverage maker, the extraction funnel and scatter do not rotate, terraces are provided in the inside bottom surface of the scatter that are higher at the center and become lower as the terraces expand toward the periphery, and drip holes (boiling water dropping holes (17)) are provided that are smaller at the center and become larger as the terraces expand toward the periphery. As a result, the boiling water drops in the funnel in a dispersed and balanced manner.

In other words, in view of the fact that when hot water is poured into the scatter the hot water strikes in a manner that is concentrated in the vicinity of the center of the scatter, in the beverage maker of Japanese Utility Model Application Publication (Kokoku) No. S51-45433, the hot water poured in the vicinity of the center is conducted to the periphery by the terrace-shaped bottom surface; and, by the drip holes provided at that periphery being made larger than the drip holes in the vicinity of the center, the hot water is dispersed in a balanced manner.

The beverage maker shown in Japanese Patent Application Laid-Open (Kokai) No. 2005-143702 disperses hot water from the flat bottom surface of a rotating scatter in a balanced manner over the entire surface of a extraction funnel. However, it is not necessarily better to disperse the hot water evenly over the entire surface of the beverage extraction funnel. In the case of coffee, for example, the hot water is sometimes poured first at the center, and then, after the coffee powder has been steamed, with a time differential, the hot water is poured along the outer circumference. There are cases where it is desirable in this manner to alter the way the hot water is poured depending on the beverage. That need, however, cannot be met with the beverage maker of Japanese Patent Application Laid-Open (Kokai) No. 2005-143702.

The beverage maker of Japanese Utility Model Application Laid-Open (Kokai) No. S52-204528 merely rotates the scatter (hot water-discharge case (14)) once and does not store the hot water and manage the drip volume; and therefore it cannot delicately vary the drip position or volume of hot water during extraction.

In the beverage maker of Japanese Utility Model Application Publication (Kokoku) No. S51-45433, neither the scatter nor the funnel rotate, but the object of dispersing the hot water in a balanced way in the funnel is no different from that of the beverage maker in Japanese Patent Application Laid-Open (Kokai) No. 2005-143702. Accordingly, it has similar difficulties to that of the beverage maker of Japanese Patent Application Laid-Open (Kokai) No. 2005-143702. In other words, it cannot drip with a time differential between the center and periphery of the funnel, or manage the drip volume by the drip position, or suitably set the way the hot water is poured depending on the beverage.

### BRIEF SUMMARY OF THE INVENTION

According, it is an object of the present invention, which was devised in view of such circumstances as described above, to provide a beverage maker that is made capable of extracting richly flavorful and delicious beverages by varying the hot water drip position or drip period (timing), or the drip volume, for the beverage extraction funnel.

The above object is accomplished by a unique structure of the present invention for a beverage maker in which hot water flowing out from a hot water pour-out port provided in an top housing of a main body unit of the beverage maker is poured into a beverage extraction funnel, and extract liquid extracted by the beverage extraction funnel is collected in a vessel (container or jug) provided below the beverage extraction funnel; and in the present invention, the beverage maker comprising:
a scatter which is provided above the beverage extraction funnel, is rotatable relative to the beverage extraction funnel about a vertical rotational center axis line, and conducts hot water flowing out from the hot water pour-out port into the beverage extraction funnel, and
a rotational drive unit for rotationally driving at least one of the scatter and beverage extraction funnel; and
the scatter has a bottom surface of which depth varies; and
the bottom surface is provided with drip holes at positions of differing depths and at differing distances from the rotational center axis line.

In the beverage maker of the present invention, the bottom surface of the scatter is provide with a plurality of drip holes that have differing depths and differing distances from the center axis. Accordingly, by the relative rotation of that scatter, the hot water drops into the beverage extraction funnel while drawing concentric circles, from drip holes of differing heights, with a time differential. Also, the drip holes from which the hot water comes out vary with a delay in the time until the hot water surface reaches the height of the drip holes. As a result, the hot water drip conditions for the beverage extraction funnel can be changed, by suitably setting the height or position (distance from the rotational center) of the drip holes, or the diameters of the drip holes, or the relative rotating speed or rotating direction or the like of the scatter, making it possible to extract richly flavorful and delicious beverages.

In the present invention, the drip holes preferably open downward from the bottom surface of the scatter, but they can be slightly inclined diagonally toward the outside or inside thereof. The bottom surface of the scatter is shaped such that, in the lateral cross-section that involves the rotational center axis line of the scatter or the beverage extraction funnel (hereinafter also called the center axis or center axis line), the height varies in a stepped shape. For example, a part of the bottom surface can be made shallower in a steppe manner.

The drip holes at deep positions in the bottom surface can be provided closer to the rotational center axis line than the drip holes at shallow positions. In this case, hot water can continue to be dripped from deep positions near the center, in the funnel, from beginning to end, dripping hot water from drip holes at shallow positions near the periphery only during a certain period during that time.

When, conversely, the drip holes at shallow positions are provided closer to the rotational center axis line than the drip holes at deep positions, then hot water can continue to be dripped at the periphery of the funnel, dripping hot water in the vicinity of the center only during a certain period during that time. In this case, by designing the diameters of the drip holes at deep positions smaller than the diameters of the drip holes at shallow positions, it is possible that hot water is dripped with a large flow volume from the shallow drip holes of large diameter during a certain period while dripping from the deep drip holes of small diameter.

Furthermore, in the present invention, the bottom surface of the scatter can be made in a spiral shape centered on the rotational center axis line. The spiral-shaped bottom surface can be deeper at the center and shallower at the periphery, or, conversely, can be shallower at the center and deeper at the periphery.

The bottom surface of the scatter can be designed such that the depth varies in a concentric circular shape. In this case also, it is possible to have either the center made deeper and the periphery made shallower or to have the center made shallower and the periphery made deeper. The hot water is preferably poured in from the hot water pour-out port of the main body unit at the deepest positions of the scatter. When the bottom surface is concentrically circular shaped, and the deepest portion is formed in a ring shape at positions other than the center (near the outermost circumference, for example), then the hot water pour-out port can be provided, above the scatter, above the deepest circular cylindrical portion. With this structure, the hot water at high temperature that drips from the hot water pour-out port during the initial stage of extraction will enter directly into the circular cylindrical portion where the drip holes at the deepest positions are and will not contact the other inner surfaces of the scatter so as to cool.

### BRIEF DESCRIPTION OF THE SEVERAL VIEWS OF THE DRAWINGS

Figure 1 is a cross-sectional side view of a coffee maker, the coffee maker being in an iced coffee extraction mode;
Figure 2 is a rear elevational view thereof;
Figure 3 is a top plan view thereof;
Figure 4 is a cross-sectional side view of the coffee maker according to one embodiment of the present invention for a beverage maker in a hot coffee extraction mode;
Figure 5 is an exploded perspective view of the main body of the coffee maker;
Figure 6 is an exploded perspective view of the chuck, hot water receptacle and iced coffee extraction funnel;
Figure 7 is an exploded perspective view of the water reservoir;
Figure 8 is an exploded perspective view of the cooling unit and other parts;
Figure 9 is an overall conceptual illustration of the coffee maker;
Figure 10 is an enlarged cross-sectional view of the vicinity of the chuck of the drive shaft;
Figure 11 is a sectional view of the scatter;
Figure 12 is a conceptual illustration of another type of the stirring vanes;
Figures 13A and 13B are conceptual illustrations of another type of the scatter used in the present invention;
Figures 14A and 14B are conceptual illustrations of still another type of the scatter used in the present invention; and
Figure 15 is a conceptual illustration of another embodiment of the present invention.

### DETAILED DESCRIPTION OF THE INVENTION

### First embodiment

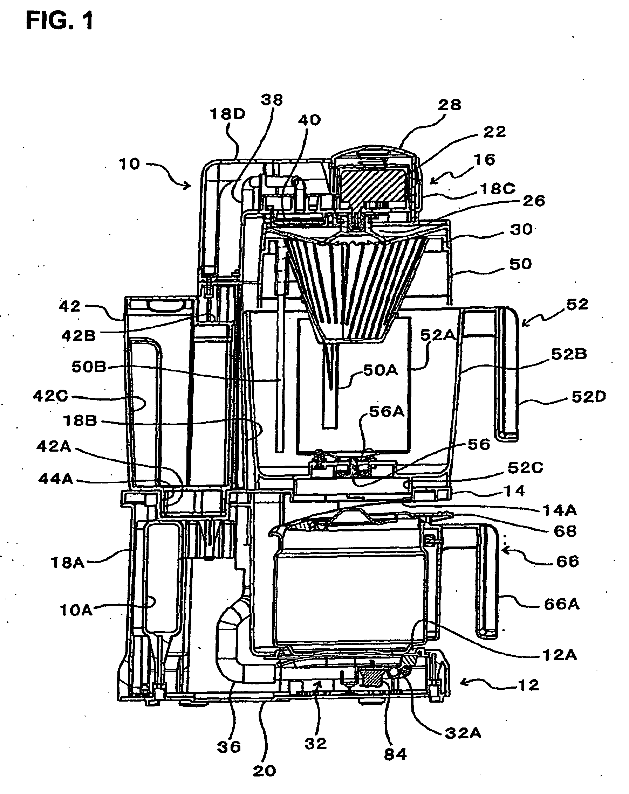

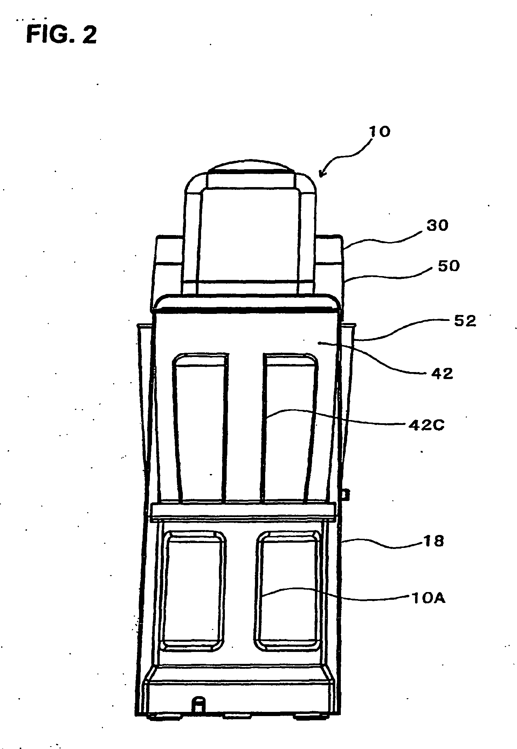

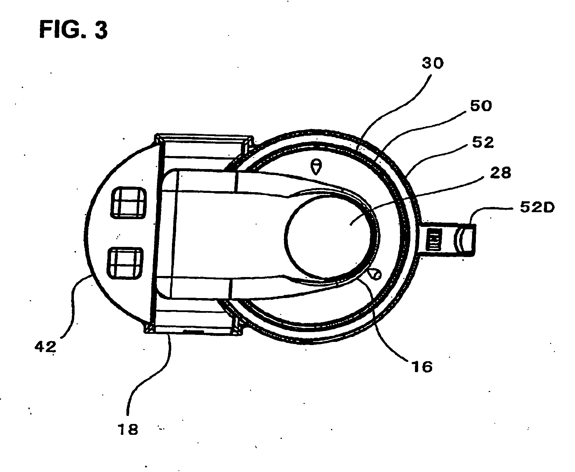

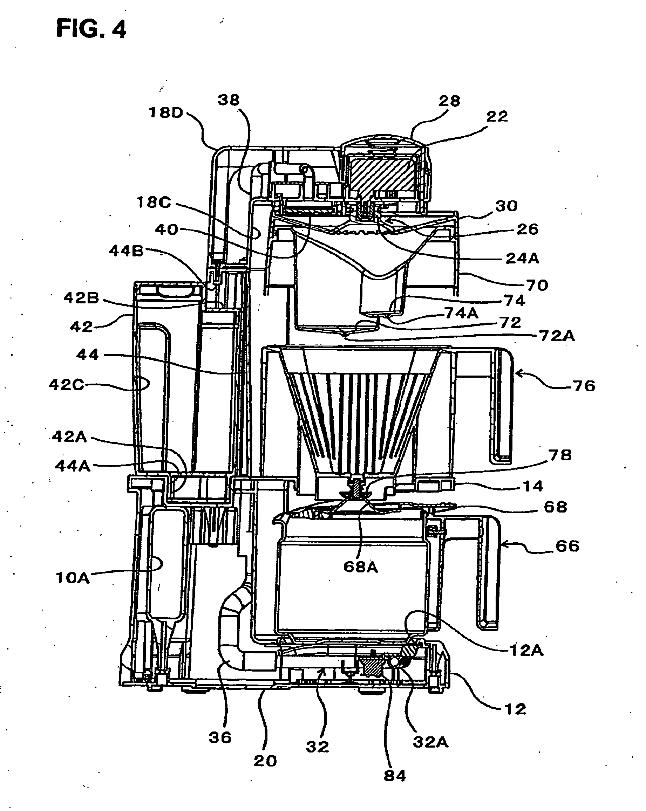

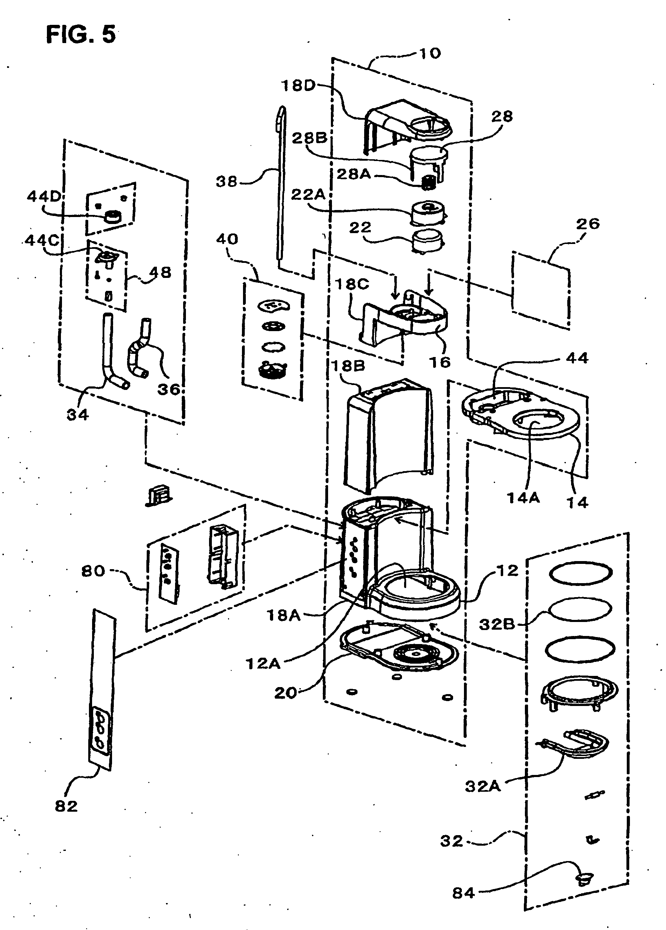

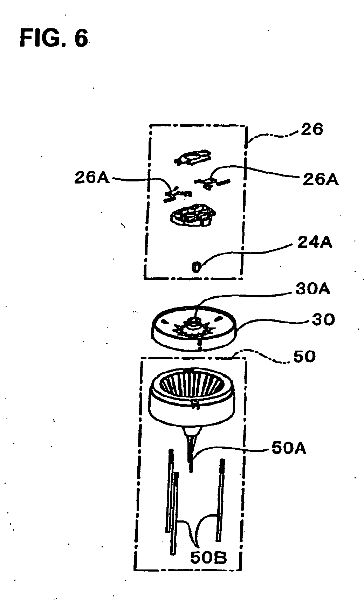

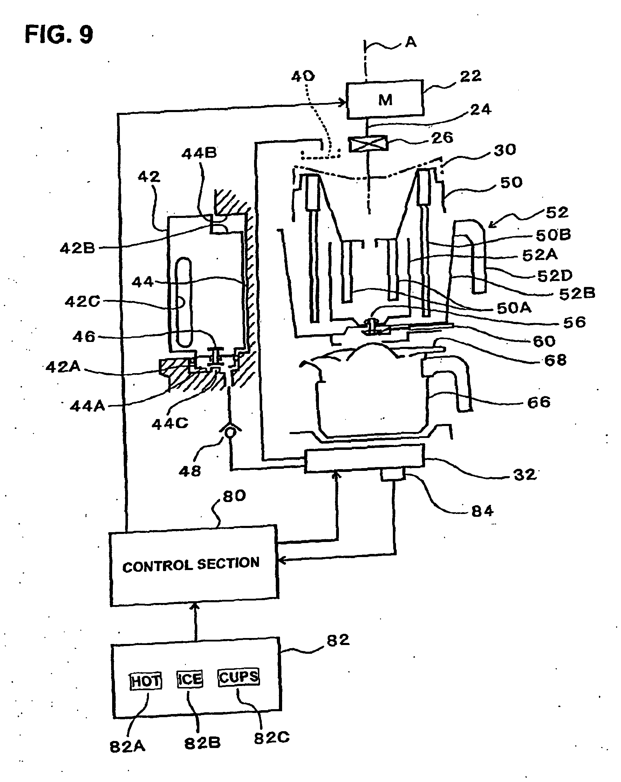

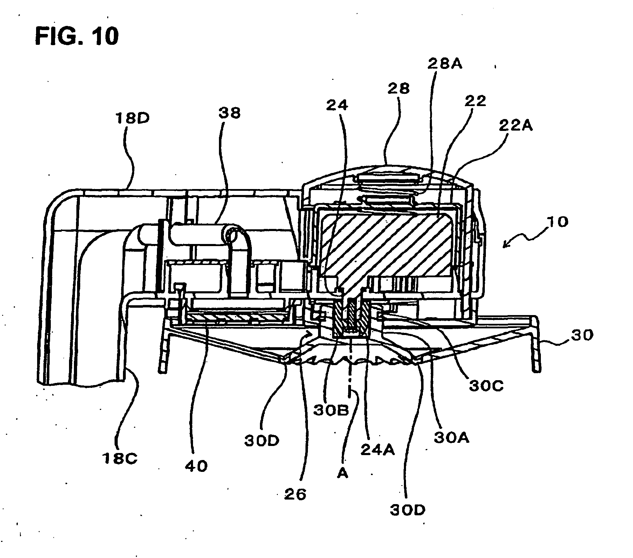

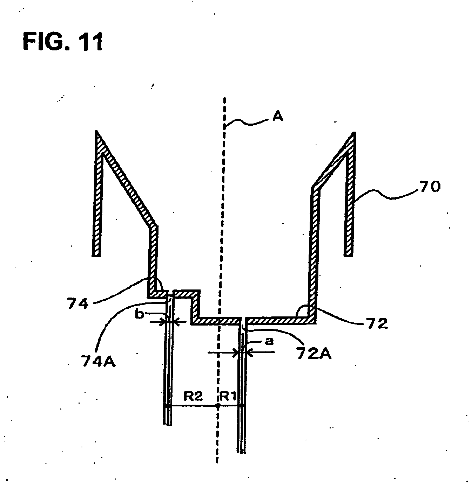

The shown embodiment is designed so that the coffee maker is capable of selectively making iced coffee and hot coffee, and the present invention is used in the hot coffee extraction mode. Figure 1 is a cross-sectional side view of the iced coffee extraction mode of the coffee maker, Figure 2 is a rear elevational view thereof, and Figure 3 is a top view thereof. Figure 4 is a cross-sectional side view of the hot coffee extraction mode of the coffee maker. Figure 5 is an exploded perspective view of the parts of the main body unit of the coffee maker, Figures 6, 7, and 8 are exploded perspective views of the parts thereof, Figure 9 is an overall conceptual illustration, Figure 10 is an enlarged cross-sectional view of the vicinity of the chuck of a drive axis, and Figure 11 shows the cross-section of the scatter.

In these Figures, the reference numeral 10 is the main body of the coffee maker that includes a base housing 12, a partition member 14, and a top housing 16 which are joined by a vertical stand 18. The vertical stand 18, moreover, as shown in Figure 5, is comprised of a lower case 18A, middle case 18B, and upper case 18C stacked and joined in the vertical direction. The base housing 12 is formed integrally in the lower case 18A, and a bottom plate 20 (see Figure 5) is secured to the bottom of the base housing 12.

One end of the partition member 14 is held sandwiched between the joining surfaces of the lower case 18A and the middle case 18B, while the other end of the partition member 14 extends out above the base housing 12.

The upper case 18C is formed so that one end thereof is secured to the upper surface of the middle case 18B, while the other end forms the top housing 16 that extends out above the partition member 14. The upper case 18C is covered from above by an upper case cover 18D, and between the upper case 18C and the upper case cover 18D, a reduced-speed motor 22 is provided.

The reduced-speed motor 22 has speed reduction gears (not shown in the drawings) inside, and the drive shaft 24 (see Figures 9 and 10), which is the output shaft of the reduced-speed motor 22, rotates at low speed. To this drive shaft 24, a hot water receptacle 30, described later, is mounted, by a chuck 26 (see Figure 6), so that the hot water receptacle 30 is detachable with respect to the drive shaft 24. The chuck 26 is opened and closed by an attachment/detachment button 28 that is provided in the upper surface of the top housing 16. In other words, the reduced-speed motor 22 is circular, as viewed from above (see Figure 5), and the lid-shaped attachment/detachment button 28 surrounds the upper part of the motor cover 22A in which the reduced-speed motor 22 is provided.

The attachment/detachment button 28 returns upward by a coil spring 28A, and a plurality of projections 28B (see Figure 5) extending downward through the outside of the motor cover 22A are engaged with engagement pawls 26A and 26A of the chuck 26. When the attachment/detachment button 28 is pushed down, the projections 28B open the chuck 26 by opening the engagement pawls 26A and 26A to the outside (that is, they release the hot water receptacle 30). Furthermore, a hexagonal column-shaped bushing 24A is secured to the lower end of the drive shaft 24, while a hexagonal hole 30B (see Figure 10) into which the bushing 24A engages is formed in a hub unit 30A of the hot water receptacle 30. A ring-shaped channel 30C is formed in the outer circumference of that hub unit 30A. With this ring-shaped channel 30C, the semicircular arch-shaped tips of the engagement pawls 26A and 26A are engaged and disengaged.

In the base housing 12 of the main body unit 10, an electric heater 32 is provided. The electric heater 32 heats water conducted from a water reservoir 42, described later, through a water hose 34 (see Figure 5) and makes high-temperature (boiled) hot water which is sent by a hot water hose 36 and hot water pipe 38 provided inside the vertical stand 18 to the top housing 16. The hot water (boiling water) is conducted, through an activated charcoal filter 40 provided adjacent to the drive shaft 24 in the lower surface of the top housing 16, to the above-described hot water receptacle 30. The tip end of the hot water pipe 38 is the hot water pour-out port.

As is clear from Figure 10, the lateral cross-section of the hot water receptacle 30 is substantially umbrella-shaped (or a substantially inverted umbrella-shaped). In the upper surface of the hot water receptacle 30, a plurality of ribs are formed in the radial direction; and hot water drip holes 30D are formed between the ribs. By suitably setting the distance from the hub unit 30A or the drip holes 30D or by varying the distance for each of the drip holes 30D, the position of the hot water drip relative to an iced coffee extraction funnel 50, described later, attached to the hot water receptacle 30 can be changed.

The heater 32 has (see Figure 5) a heating element 32A bent in substantially a U-shape around a metal pipe, and a circular metal plate 32B is attached to the upper surface of heating element 32A. The metal plate 32B is fitted from below into the circular opening 12A provided in the base housing 12. On the metal plate 32B that faces the opening 12A, a jug 66, described later, is placed; and, in the hot coffee extraction mode, the jug 66 is kept warm.

The water reservoir 42 will be described.

The water reservoir 42 is, as shown in Figures 1 and 4, mounted on the outer surface of the middle case 18B in the main body unit 10. In other words, as seen from Figure 3, the vertical stand 18 has a substantially semicircular shape, as viewed from above, and the water reservoir 42 is shaped so that the horizontal cross-section thereof divides a part of the column vertically, so that the circular arc-shaped outer surface thereof follows, substantially smoothly, the outer surface of the vertical stand 18.

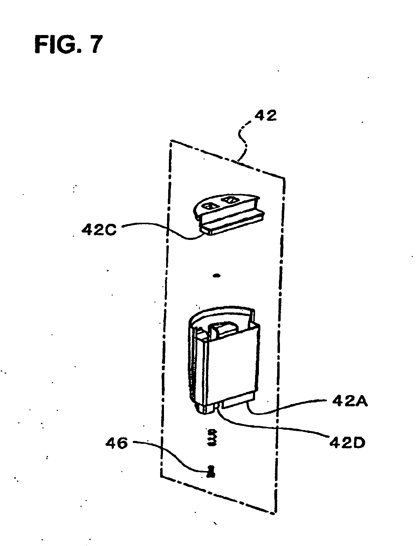

The water reservoir 42 is mounted in a water reservoir mounting chamber 44 that opens outwardly and is provided in the middle case 18B. In the partition member 14 (see Figure 4) that forms the bottom of this water reservoir mounting chamber 44, a concavity 44A, substantially trapezoidal as seen from above, is formed (see Figures 5 and 9); and in the bottom of the water reservoir 42, a convexity 42A, capable of engaging the concavity 44A substantially vertically from above, is formed (see Figure 7). In the upper surface of the water reservoir 42, moreover, a step 42B is formed on the inside (on the inmost side of the water reservoir mounting chamber 44), and the outside of the upper surface of the water reservoir 42 bulges out to the outside of the water reservoir mounting chamber 44. The upper surface of the water reservoir 42 is provided with a cover 42C (see Figure 7).

In the water reservoir mounting chamber 44, a step 44B is formed above the step 42B on the water reservoir 42 side so as to be separated by a certain distance, specifically by a distance slightly larger than the depth of the concavity 44A. Accordingly, when the water reservoir 42 is pulled upward from the mounted condition shown in Figures 1 and 4, the step 42B strikes the step 44B in the mounting chamber 44 from below; as a result, the upward movement thereof is limited. If, in this condition, the step 42B is released from the step 44B by way of tilting the top of the water reservoir mounting chamber 44 outward, then the water reservoir 42 can be pulled diagonally upward while causing the convexity 42A in the bottom to bulge out from the concavity 44A.

In the outer surface of the water reservoir 42 that is of a circular arc shape, as seen from above, a handle 42C is provided. In the lower case 18A, a handle 10A is provided so as to be positioned below the water reservoir 42.

In the convexity 42A which is in the bottom of the water reservoir 42, a water discharge valve 46 is provided (see Figures 7 and 9). This water discharge valve 46 is in a downwardly moved position by a coil spring so as to close the water discharge path; and when the water reservoir 42 is loaded in the water reservoir mounting chamber 44, the water discharge valve 46 is pushed upward by a projection 44C provided in the concavity 44A, thus opening the water discharge path. The opposing surfaces of the convexity 42A and concavity 44A are tightly sealed; accordingly, water from the water reservoir 42 will flow out only in a volume that will fill the inside of the concavity 44A and will never flow out to the outside of the concavity 44A.

In actuality, moreover, a tube 44D (see Figure 5), surrounding the projection 44C and opening upward, is formed in the water reservoir mounting chamber 44, in the bottom of the water reservoir 42, a tube 42D (see Figure 7) that engages that tube, on the inner diameter side thereof, is formed, and the engaging circumferential surfaces of the two tubes 44D and 42D are tightly sealed. Accordingly, when the water discharge valve 46 opens, the interior of a small void surrounded by the tubes 44D and 42D is filled with water.

As seen from Figure 5, to the bottom of the small void surrounded by the tubes 44D and 42D, the above-described water hose 34 is connected through a check valve 48. As a result, when water from the water reservoir 42 is conducted through the water discharge valve 46, check valve 48, and water pipe 34, into the heater 32 and heated to boiling by the heater 32, then it flows out through the hot water hose 36, hot water pipe 38, and filter 40 into the hot water receptacle 30. At such time, because of the presence of the check valve 48, the boiling water will not flow backward to the water reservoir 42. When the water level inside the heater 32 drops, water is supplied from the water reservoir 42, and the above action is continued.

The iced coffee extraction mode will be described below.

In this iced coffee extraction mode, as seen from Figure 1, an iced coffee extraction funnel 50 is attached to the hot water receptacle 30, and a cooling unit 52 is mounted on the partition member 14. The iced coffee extraction funnel 50, as shown in Figures 1 and 9, has a circular upper edge that is folded back to the outside, and the outer circumference thereof is engageable with the hot water receptacle 30. A joining structure can be effected, for example, such that, in the outer circumference of the upper edge of the funnel 50, a channel bent into a hook shape is formed so that the upper end thereof opens at the upper edge, and a projection that engages the hook-shaped channel is formed on the inner surface of the outer circumferential part of the hot water receptacle 30, so that, when the funnel 50 is pushed in and upward relative to the hot water receptacle 30 while causing the upper end portion of the hook-shaped channel to engage the projection, the projection will be caused, by slightly rotating the funnel 50, to engage in the interior (horizontal portion) of the hook-shaped channel.

In the bottom of the funnel 50 are secured with two vanes 50A for stirring the coffee liquid; and, from the vicinity of the upper edge of the funnel 50, three stirring rods 50B that constitute vanes for stirring ice water are secured. These stirring vanes 50A and stirring rods 50B extend vertically downward. The radius of rotation of the stirring vanes 50A is set to be smaller than the radius of rotation of the stirring rods 50B.

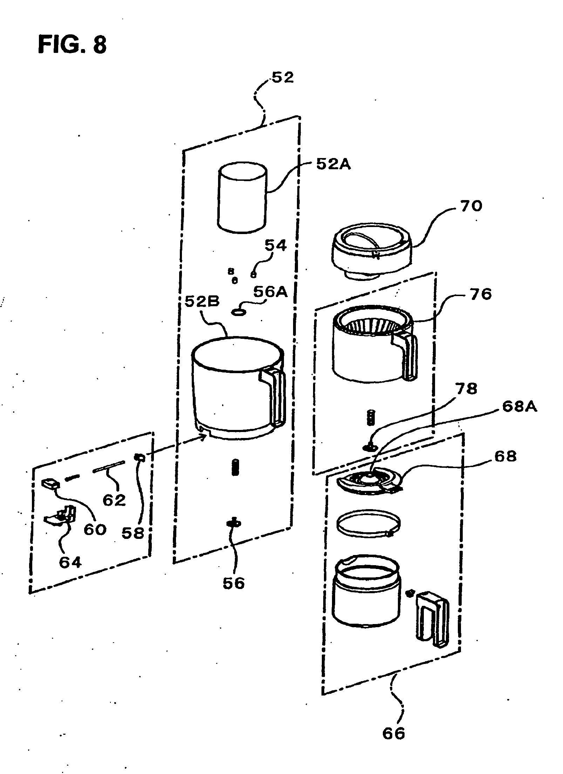

The cooling unit 52 is comprised of a cylindrical coffee liquid receptacle 52A (a coffee liquid container) having a bottom and an ice water reservoir 52B (the cooling liquid reservoir), which are combined concentrically about a vertical axis (concentric axis) as the center. The coffee liquid receptacle 52A is made of a metal having good thermal conductivity such as aluminum. The bottom of the coffee liquid receptacle 52A is secured so that it floats upward (or is raised) from the ice water reservoir 52B with spacers 54 (see Figures 1 and 8) at three locations from the ice water reservoir 52B. As a consequence, ice water also contacts the bottom surface of the coffee liquid receptacle 52A, thus enhancing the coffee liquid cooling effect.

The center part of the bottom of the coffee liquid receptacle 52A sinks downward and adheres tightly to the ice water reservoir 52B, and a discharge valve 56 passes through the tightly adhering center part. To this discharge valve 56 is applied a downward-oriented return tendency, and the upper end of the discharge valve 56 normally closes the discharge hole in the coffee liquid receptacle 52A by a seal ring 56A (see Figures 1 and 8). The lower end of this discharge valve 56 is formed in a substantially inverted umbrella shape. When this inverted umbrella-shaped part is pushed up from the side by a valve opening/closing piece 58 capable of sliding in the horizontal direction (see Figures 5 and 6), the discharge valve 56 is thereby opened, allowing the coffee liquid to be discharged downward.

As seen from Figures 5 and 6, the valve opening/closing piece 58 is connected by a rod 62 to an operating piece (open/close button) 60 which is located near the outer circumference of the bottom of the ice water reservoir 52B, and it is mounted to the bottom of the ice water reservoir 52B by a cover 64. The operating piece 60, rod 62, and valve opening/closing piece 58 are imparted with a tendency to return to the outside (direction that closes the discharge valve 56) by a coil spring.

The cooling unit 52 is placed on the partition member 14 with the hot water receptacle 30 set on the iced coffee extraction funnel 50, with the stirring vanes 50A of the iced coffee extraction funnel 50 inserted in the coffee liquid receptacle 52A from above, and with the stirring rods 50B inserted in the ice water reservoir 52B from above, so that the whole of these are on the partition member 14. When the cooling unit 52 is placed on the partition member 14c, the circular seat 52C (see Figure 1) provided at the bottom of the ice water reservoir 52B is engaged with a circular hole 14A provided in the partition member 14; as a result, the cooling unit 52 is positionally stabilized. The reference numeral 52D is a handle of the ice water reservoir 52B.

A jug (vessel) 66 is mounted below the cooling unit 52 as shown in Figure 1. This jug 66 is placed on the round plate 32B of the heater 32 (see Figure 5) attached to the opening 12A in the base housing 12, with a thermally insulating mat in between. The cover 68 (or cover plate) 68 for the jug 66A is formed with a convexity 68A (see Figure 4) which is erected in the center of the cover 68, and a plurality of drip holes are formed in a ring-shaped channel surrounding the convexity 68A. As a result, if the operating piece 60 of the cooling unit 52 is pushed from the side to open the discharge valve 56, iced coffee liquid in the coffee liquid receptacle 52A flows down into the jug 66. Reference numeral 66A (see Figure 1) is a handle attached to the jug 66. The convexity 68A of the cover 68 shown in Figure 4 is for pushing up and opening the discharge valve 78 for a hot coffee extraction funnel 76 in the hot coffee extraction mode that will be described later.

In this condition, that is, in the iced coffee extraction mode, the hot water receptacle 30 is attached to the iced coffee extraction funnel 50, the stirring vanes 50A and stirring rods 50B are inserted, respectively, into the coffee liquid receptacle 52A and ice water reservoir 52B of the cooling unit 52, and the whole of these parts is placed on the partition member 14. Then, the hot water receptacle 30 and funnel 50, which form a single unit, are pulled up, allowing the hub unit 30A of the hot water receptacle 30 to be locked to the drive shaft 24 by the chuck 26. As a result, when the motor 22 is started, the hot water receptacle 30 and iced coffee extraction funnel 50 are rotated as a unit together with the drive shaft 24.

When a paper filter and coffee powder (neither shown in the drawings) are set beforehand in the funnel 50, and the heater 32 is caused to heat and hot water is introduced from the filter 40, then the hot water is dispersed by the hot water receptacle 30 and dripped into the funnel 50; and the extracted coffee liquid is accumulated in the coffee liquid receptacle 52A of the cooling unit 52. Ice water has been placed in the ice water reservoir 52B beforehand; accordingly, the extracted coffee liquid is quickly chilled in the coffee liquid receptacle 52A. At that time, both the stirring vanes 50A and the stirring rods 50B are rotated together with the funnel 50, thus stirring the coffee liquid and ice water; accordingly, the coffee liquid cooling effect is significantly great.

When coffee extraction finishes, and the coffee liquid accumulated in the coffee liquid receptacle 52A of the cooling unit 52 has been sufficiently cooled by the ice water, the motor 22 is stopped. When next the operating piece 60 of the discharge valve 56 is pushed from the side to open the discharge valve 56, chilled coffee liquid flows down into the jug 66. Then, the jug 66 is removed from the base housing 12, and the iced coffee therein is poured in a cup.

Next, the hot coffee extraction mode will be described, referring primarily to Figures 4, 5, 8, and 11.

In this hot coffee extraction mode, the scatter 70 is attached to the hot water receptacle 30. In other words, the scatter 70 is attached in place of the iced coffee extraction funnel 50 used in the above-described iced coffee extraction mode. In this scatter 70 are formed a deep concavity 72 at a position including the rotational center axis (centerline) A (see Figure 11) of the drive shaft 24 (see Figures 9 and 10) (through which the center axis A passing), and a shallow concavity 74 not at a position including the rotational center axis A (through which the center axis A not passing). The bottoms of the two concavities 72 and 74 are continuous in a substantially stair shape as shown in Figure 11.

In the bottom of each of the concavities, a drip hole 72A and 74A, respectively, is formed. The positions R1 and R2 in the radial direction of the drip holes 72A and 74A relative to the rotational center axis A are set so that R1 < R2, and the hole diameter a of the drip hole 72A is smaller than the hole diameter b of the drip hole 74A (a < b).

The radial position R1 of the drip hole 72A is set so that, when coffee powder mainly for a small number of people (one or two people) is put in the funnel 76 described later, the hot water drips along the circle of comparatively narrow radius in the vicinity of the center. On the other hand, the radial position R2 of the drip hole 74A is set so that, when coffee powder for a medium or large number of people is put in the funnel 76, the hot water not only strikes coffee powder positioned near the center but also strikes coffee powder positioned apart from the center. The hole diameters a and b of the drip holes 72A and 74A are set so as to optimize the distribution of the hot water dripping from the drip holes 72 and 74, taking into consideration the differences in the depths from the liquid surface of the hot water accumulated in the scatter 70 (i.e. from the hot water surface).

The reference numeral 76 denotes a hot coffee extraction funnel. This funnel 76 can be locked in the hole 14A of the partition member 14. The locking structure is made, for example, so that an engagement projection provided on the funnel 76 is engaged in a hook-shaped channel formed in the inner circumferential surface of the hole 14A, and the funnel 76 is rotated slightly in the horizontal direction to lock the funnel 76. In the bottom of this funnel 76 is provided a discharge valve 78. The discharge valve 78 has a structure similar to that of the discharge valve 56 of the cooling unit 52 described above.

The discharge valve 78 has a tendency to return downward, and, while a seal ring attached to its upper end closes the discharge hole of the funnel 76, the lower end of the discharge valve 78 is formed in a substantially inverted umbrella shape. The discharge valve 78 opens the discharge hole when its inverted umbrella-shaped part is pushed up from below. When the jug 66 is set below the partition member 14 (on the base housing 12), the convexity 68A of the cover 68 of the jug 66 makes contact from below with the lower end of the discharge valve 78; and, due to the inclined surface of the convexity 68A, the cover 68 is pushed up and opens the discharge hole of the funnel 76 automatically. Hot coffee extraction is conducted with the jug 66 set in this condition. At this time, the funnel 76 is locked to the partition member 14, and thus the funnel 76 is pushed up by the jug 66 and will not ever float.

In the above-described hot coffee extraction mode, a paper filter and coffee powder are first set in the funnel 76, and the funnel 76 is next secured (locked) to the partition member 14. Then, when the heater 32 is made to emit heat, and boiling water is poured into the hot water receptacle 30, hot water enters the scatter 70. The hot water first enters the deep concavity 72, and drips from the drip hole 72A in the vicinity of the center of the funnel 76. Since the scatter 70 is rotated together with the drive shaft 24, dripping occurs on a small circle in the vicinity of the center of the funnel 76.

The volume of hot water flowing into the funnel 76 from the hot water receptacle 30 is set so that it is greater than the volume of drip from the drip hole 72A, so that the liquid surface (hot water surface) in the deep concavity 72 rises. When the liquid surface of the hot water rises and spreads to the shallow concavity 74, hot water begins to drip also from the drip hole 74A; and when the liquid surface rises further, hot water is dripped from both of the drip holes 72A and 74A.

As described above, the radial position R2 of the drip hole 74A is greater than the radial position R1 of the drip hole 72A. Accordingly, the hot water dripping from the drip hole 74A drips on a circle that is distant from the center of the funnel 76. As a result, hot water can be suitably dispersed and dripped onto the coffee powder inside the funnel 76. In this manner, it is possible to at first pour most of the hot water in the vicinity of the center of the funnel 76, and then, after the coffee powder has been suitably steamed, to have the hot water poured also nearer to the outer circumference and create optimal extraction conditions. It is thus possible to extract hot coffee which is highly fragrant and exhibits good taste.

Furthermore, since there is a gap between the funnel 76 and the scatter 70 (see Figure 4), the operator is able to view the inside of the funnel 76 from this gap. In other words, the condition wherein foam is generated inside the funnel 76 can be verified. As a result, pleasure increases when extracting coffee.

Next, a control section 80 will be described with reference to Figures 5 and 9.

The control section 80 controls the heater 32 and the motor 22 based on the beverage type, hot or ice, and on the number of portions (number of cups) to be extracted, which are set by the input means 82. The input means 82 have switches 82A and 82B for inputting either hot (H) or ice (I), and a switch 82C for inputting how many cups (extraction quantity). The control section 80 determines hot or ice based on an ON input from either switch 82A or switch 82B, and it determines how many cups (extraction quantity) by the number of turning-on of switch 82C.

The control section 80 controls the volume of hot water poured in by changing the heating time with the heater 32 according to the extraction quantity. When heating for a time To for one person, for example, the heating time is made 2T₀ in case for two persons, and 3T₀ if it is for three persons. The control section may change the flow-out volume in response to the type, whether hot or ice. When it is desired to extract strong coffee for iced coffee, for example, then the flow-out volume is made less, so that the heating time is set shorter than when extracting hot coffee.

It can be set so that the control section 80 changes the hot water flow-out speed for hot or iced coffee. For iced coffee, for example, the flow-out speed is made slower in order to extract strongly. As a result, the temperature of the heater 32 is set lower than when extracting hot coffee. A temperature sensor 84 for detecting the heater temperature can be provided as shown in Figures 4 and 9, for example, so that the control section 80 performs feedback control in response to the heater temperature.

In the embodiment described above, selection can be made for a hot coffee extraction mode and an iced coffee extraction mode, but a part of the configuration used in this embodiment is applicable to a coffee maker so that it used exclusively in one of two modes. Using the scatter 70 attached to the drive shaft 24 at the top of the main body unit (in a manner that it is either detachable or undetachable), a coffee maker for extracting only hot coffee or a coffee maker for extracting only iced coffee can be made. In the latter case in which the coffee maker uses a scatter, an iced coffee extraction funnel is held in the main body unit; and as in the case of extracting hot coffee, hot water can be dispersed over the entire funnel, and it is possible to visually verify the situation inside the funnel during extraction.

The bottom of the scatter can be made in a conical shape so that the scatter is deep in the vicinity of the center, and it can also be made in a multi-step stair shape (including two steps or two or more steps) so that the scatter is deep in the vicinity of the center and it becomes shallower in steps toward the vicinity of the periphery. Either one or a plurality of drip holes is provided at positions thereof depth in the scatter.

When the scatter bottom is made in a stair shape, the liquid surface of the hot water will change (become lower) continuously, and the height of the drip holes provided in steps will change non-continuously, so that it is easy to adjust the relationship between the volume of hot water and the number of drip holes (for dripping hot water) used. Adjustment can be made, for example, so that only drip holes at deep positions in the vicinity of the center are used when extracting for one person, preventing hot water from dripping in the region where there is no coffee powder at the funnel periphery, or so that the hot water is dispersed and made to drip over a wide range out to the vicinity of the funnel periphery when extracting portions for many people.

The structure, in which steps 42B and 44B are formed, respectively, separately by a certain measure in the vertical direction in the water reservoir 42 and the water reservoir mounting chamber 44, is applicable to a dedicated coffee maker for extracting either hot coffee only or iced coffee only, with the above-described advantages.

Also, the above configuration for the water reservoir 42 and water reservoir mounting chamber 44 is applicable to water reservoirs or liquid reservoirs or the like used in small electric products other than coffee makers, such, for example, as interior humidifiers, or humidifiers provided in cosmetic equipment or heating equipment.

The configuration for controlling the hot water extraction volume according to the heating time with the heater 32 can also be applied to dedicated coffee makers for hot coffee or iced coffee. In such cases, the heater heating time can be monitored with a timer, and the structure will not become complex because the control section 80, formed by a microcomputer, already includes a timer.

Furthermore, the stirring vanes 50A and stirring rods 50B attached to the iced coffee extraction funnel are applicable to a dedicated coffee maker for iced coffee. As described in the foregoing, the configurations of the above-described embodiment are applicable to dedicated iced coffee makers and not only to coffee makers for both hot and iced coffee.

### Second embodiment

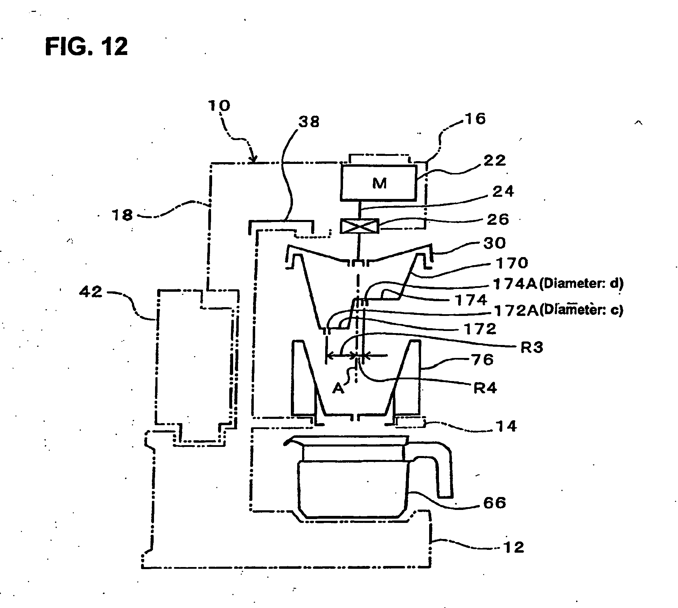

Figure 12 is a cross-sectional side view of the beverage maker of another embodiment of the present invention. In this second embodiment, the scatter 70 in the first embodiment shown in Figures 1 to 11 is replaced with another scatter 170. Accordingly, in Figure 12, the same reference numerals are applied to the parts that are the same as in the first embodiment, and the description thereof is omitted. The scatter 170 will be described below.

In the scatter 170 of the second embodiment, a deep concavity 172 not involving the rotational center axis line A (through which the center axis line A not passing), and a shallow concavity 174 involving the rotational center axis line A (through which the center axis line A passing) are formed, and the bottoms of the two concavities 172 and 174 are connected in a substantially stepped shape.

In the bottoms of these concavities 172 and 174, drip holes 172A and 174A are formed, one each, respectively. The distances R3 and R4 of the drip holes 172A and 174A in the radial direction relative to the rotational center axis line A are set such that R3 is greater than R4 (R3 > R4). Also, the diameter c of the drip hole 172A is smaller than the diameter d of the drip hole 174A (c < d).

In this second embodiment, it is possible to continue to drip hot water from the drip hole 172A at the periphery of the funnel 76 from beginning to end, and then, for a certain period only, during that time, when the hot water surface has risen, to drip hot water from the drip hole 174A in the vicinity of the center of the funnel 76 with an increased drip volume. As a result, hot water can initially be dripped, a small volume at a time, at the periphery of the funnel 76 and the coffee powder steamed, and then, after that, hot water can be dripped, with a time differential, in the vicinity of the center with increased volume.

### Third embodiment

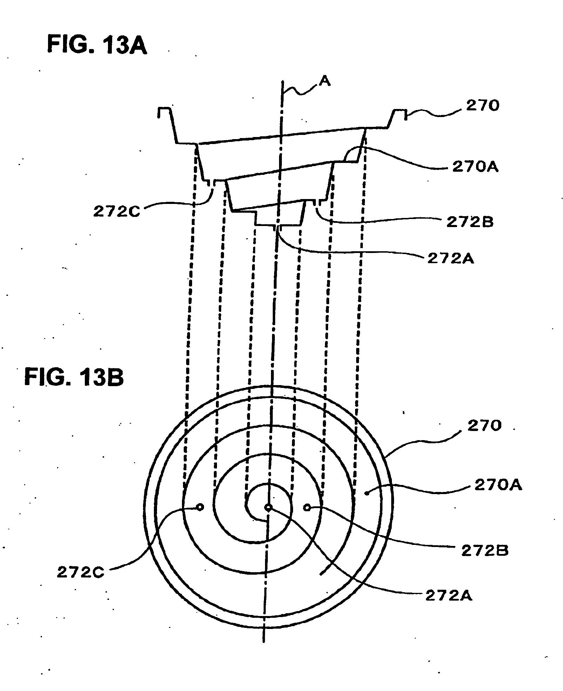

Figures 13A and 13B show a cross-sectional side view and a top view, respectively, of another type of the scatter.

The scatter 270 in this third embodiment has a substantially spiral shaped bottom surface centered on the rotational center axis line A. In other words, this bottom surface of the scatter 270 has a spirally shaped step portion 270A formed therein such that it is deep at the center but gradually becomes shallower toward the periphery. Also, drip holes 272A to 272C that open downward are formed at the center of the step part 270A that is deepest and at a plurality of positions at differing heights.

In this third embodiment, when extraction starts, hot water begins dripping from the center drip hole 272A at the center of the funnel, and, as time elapses, it drips while the drip positions expand in the peripheral direction, sequentially, from the other drip holes 272B and C. In addition, in the final stage of extraction, drip stops from the periphery and finishes with a drip from the center only.

### Fourth embodiment

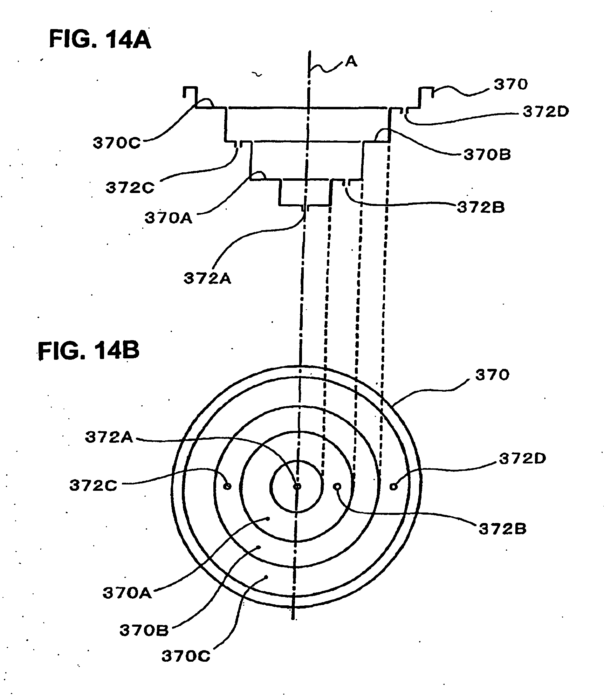

Figures 14A and 14B show a cross-sectional side view and a top view, respectively, of another type of the scatter.

The scatter 370 of this fourth embodiment has ring-shaped step portions 370A to 370C formed with the depth varying concentrically circularly centered on the rotational center axis line A. In other words, the bottom surface is formed to have step portions 370A to 370C so that the depth is large (deep) at the center but gradually becomes shallower toward the periphery, and drip holes 373A and 372B to 372D are formed at the center and in the step portions 370A to 370C, respectively.

In this structure of the fourth embodiment, as in the above-described third embodiment, when extraction starts, while hot water is dripped from the center, as the hot water surface rises, the hot water drip positions are expanded to the periphery. In the final stage of extraction, as the hot water surface drops, the drip from the periphery stops, and dripping finishes with the drip from the center only.

### Fifth embodiment

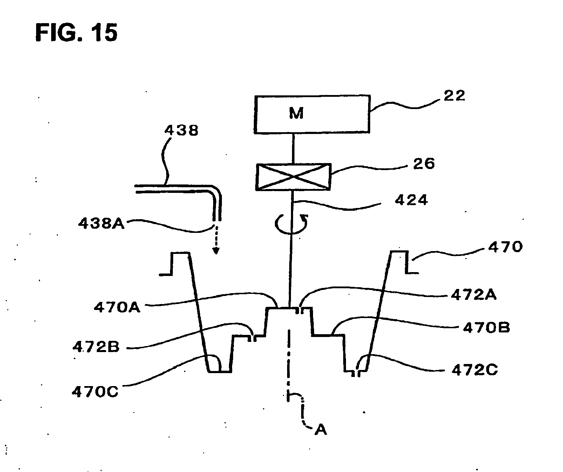

Figure 15 is a cross-sectional side view of another embodiment of the present invention.

The scatter 470 used in this fifth embodiment has a bottom surface that is shallow at the center and gradually becomes deeper concentrically circularly toward the periphery. More specifically, gradually deepening circular cylindrical portions 470B and 470C are formed so as to enclose the center portion 470A concentrically circularly.

A drive shaft 424 is provided vertically from the center of the center portion 470A, so that the drive shaft 424 is detachably attached by a chuck 26 to a motor 22. Accordingly, the scatter 470 is rotated about a vertical rotational center axis line A that passes through the drive shaft 424. In the scatter 470 are formed drip holes 472A to 472C that open downward.

In Figure 15, the reference numeral 438 is a hot water pipe for conducting hot water heated and boiled by a heater (not shown), as in the first embodiment shown in Figures 1 to 11. The hot water pour-out port 43 8A of this hot water pipe 438 is provided above the deepest circular cylindrical portion 470C of the scatter 470, so that hot water flowing out from the hot water pour-out port 438A drips directly in the circular cylindrical portion 470C. As a result, hot water enters the circular cylindrical portion 470C directly without contacting the inner surface of the scatter 470 so that it cools, particularly in the earliest stage of extraction, so that high-temperature hot water can be conducted to the funnel.

## Claims

1. A beverage maker in which hot water flowing out from a hot water pour-out port provided in an top housing (16) of a main body unit (10) of said beverage maker is poured into a beverage extraction funnel (50), and extract liquid extracted by said beverage extraction funnel (50) is collected in a vessel provided below said beverage extraction funnel (50), said beverage maker comprising:
a scatter (70), which is provided above said beverage extraction funnel (50), is rotatable relative to said beverage extraction funnel (50) about a vertical rotational center axis line, and conducts hot water flowing out from said hot water pour-out port into said beverage extraction funnel (50), and
a rotational drive unit for rotationally driving at least one of said scatter (70) and beverage extraction funnel (50); **characterized in that**
said scatter (70) has a bottom surface whose depth varies, and
said bottom surface is provided with drip holes (72A,74A) at positions of differing depths and at differing distances from the rotational center axis line.

2. The beverage maker according to claim 1, wherein said scatter (70) has a bottom surface of which height varies in a stepped shape in a lateral cross-section that involves the rotational center axis line.

3. The beverage maker according to claim 1 or 2, wherein said drip holes (72A,74A) at deeper positions in said bottom surface are closer to the rotational center axis line than drip holes at shallower positions in said bottom surface.

4. The beverage maker according to claim 1 or 2, wherein said drip holes (72A,74A) at shallower positions in said bottom surface are closer to the rotational center axis line than drip holes (72A,74A) at deeper positions in said bottom surface.

5. The beverage maker according to any one of claims 1 through 4, wherein diameters of said drip holes (72A,74A) at deeper positions in said bottom surface are smaller than diameters of drip holes (72A,74A) at shallower positions.

6. The beverage maker according to claim 1 or 2, wherein a depth of said bottom surface of said scatter (70) varies in a substantially spiral shape centered on the rotational center axis line.

7. The beverage maker according to claim 1 or 2, wherein a plurality of ring-shaped parts of differing depths are provided substantially concentrically in said bottom surface of said scatter (70) centered on the rotational center axis line.

8. The beverage maker according to claim 7, wherein a hot water pour-out port of said beverage maker is provided above a deepest ring-shaped part of said rotating scatter (70), and hot water from said hot water pour-out port is poured into said deepest ring-shaped part.

## Patentansprüche

1. Getränkezubereitungsvorrichtung, in der heißes Wasser, das aus einer Ausgußöffnung für heißes Wasser strömt, die in einem oberen Gehäuse (16) einer Hauptkörpereinheit (10) der Getränkezubereitungsvorrichtung vorgesehen ist, in einen Getränkeextraktionstrichter (50) gegossen wird, und von dem Getränkeextraktionstrichter (50) extrahiertes Flüssigkeitsextrakt in einem Gefäß gesammelt wird, das unterhalb des Getränkeextraktionstrichters (50) vorgesehen ist, wobei die Getränkezubereitungsvorrichtung umfasst:
einen Streuer (70) oberhalb des Getränkeextraktionstrichters (50), der relativ zu dem Getränkeextraktionstrichter (50) um eine vertikale, zentrale Rotationsachslinie drehbar ist und von der Ausgußöffnung für heißes Wasser herausströmendes heißes Wasser in den Getränkeextraktionstrichter (50) leitet, und
eine Rotationsantriebseinheit zum rotierenden Antreiben des Streuers (70) und/oder des Getränkeextraktionstrichters (50), **dadurch gekennzeichnet, dass**
der Streuer (70) eine Bodenfläche hat, deren Tiefe variiert, und
die Bodenfläche mit Tropflöchern (72A, 74A) an Stellen unterschiedlicher Tiefen und in unterschiedlichen Abständen von der zentralen Rotationsachslinie versehen ist.

2. Getränkezubereitungsvorrichtung nach Anspruch 1, wobei der Streuer (70) eine Bodenfläche hat, deren Höhe stufenförmig in einem seitlichen Querschnitt variiert unter Einbeziehung der zentralen Rotationsachslinie.

3. Getränkezubereitungsvorrichtung nach Anspruch 1 oder 2, wobei die Tropflöcher (72A, 74A) an tieferen Stellen in der Bodenfläche näher zu der zentralen Rotationsachslinie liegen als Tropflöcher an flacheren Stellen in der Bodenfläche.

4. Getränkezubereitungsvorrichtung nach Anspruch 1 oder 2, wobei die Tropflöcher (72A, 74A) an flacheren Stellen in der Bodenfläche näher zu der zentralen Rotationsachslinie liegen als Tropflöcher (72A, 74A) an tieferen Stellen in der Bodenfläche.

5. Getränkezubereitungsvorrichtung nach einem der Ansprüche 1 bis 4, wobei Durchmesser der Tropflöcher (72A, 74A) an tieferen Stellen in der Bodenfläche kleiner sind als Durchmesser von Tropflöchern (72A, 74A) an flacheren Stellen.

6. Getränkezubereitungsvorrichtung nach Anspruch 1 oder 2, wobei eine Tiefe der Bodenfläche des Streuers (70) in einer im wesentlichen Spiralform, zentriert auf der zentralen Rotationsachslinie, varriert.

7. Getränkezubereitungsvorrichtung nach Anspruch 1 oder 2, wobei mehrere ringförmige Teile unterschiedlicher Tiefen im wesentlichen konzentrisch in der Bodenfläche des Streuers (70), zentriert auf der zentralen Rotationsachslinie, vorgesehen sind.

8. Getränkezubereitungsvorrichtung nach Anspruch 7, wobei eine Ausgußöffnung für heißes Wasser der Getränkezubereitungsvorrichtung oberhalb eines tiefsten ringförmigen Teils des rotieren Streuers (70) vorgesehen ist und heißes Wasser von der Ausgußöffnung für heißes Wasser in das tiefste ringförmige Teil gießbar ist.

## Revendications

1. Appareil pour la production de boissons dans lequel de l'eau chaude s'écoulant d'un orifice d'écoulement d'eau chaude prévu dans un boîtier supérieur (16) d'une unité de corps principal (10) dudit appareil pour la production de boissons est versée dans un entonnoir d'extraction de boissons (50), et du liquide d'extraction extrait par ledit entonnoir d'extraction de boissons (50) est recueilli dans un réservoir prévu en dessous dudit entonnoir d'extraction de boissons (50), ledit appareil pour la production de boissons comprenant :
un diffuseur (70), qui est prévu au-dessus dudit entonnoir d'extraction de boissons (50), peut tourner par rapport audit entonnoir d'extraction de boissons (50) autour d'un axe central vertical, et achemine de l'eau chaude sortant par ledit orifice d'écoulement d'eau chaude dans ledit entonnoir d'extraction de boissons (50), et
une unité d'entraînement en rotation destinée à entraîner en rotation au moins soit ledit diffuseur (70), soit ledit entonnoir d'extraction de boissons (50),
**caractérisé en ce que** ledit diffuseur (70) possède une surface inférieure dont la profondeur varie, et
ladite surface inférieure est munie de trous de goutte-à-goutte (72A, 74A) dans des positions situées à différentes profondeurs et à différentes distances de l'axe central de rotation.

2. Appareil pour la production de boissons selon la revendication 1, dans lequel ledit diffuseur (70) possède une surface inférieure dont la hauteur varie en forme de gradins dans une coupe latérale passant par l'axe central de rotation.

3. Appareil pour la production de boissons selon la revendication 1 ou 2, dans lequel lesdits trous de goutte-à-goutte (72A, 74A) dans les positions plus profondes de ladite surface inférieure sont plus proches de l'axe central de rotation que les trous de goutte-à-goutte dans des positions moins profondes de ladite surface inférieure.

4. Appareil pour la production de boissons selon la revendication 1 ou 2, dans lequel lesdits trous de goutte-à-goutte (72A, 74A) dans des positions moins profondes de ladite surface inférieure sont plus proches de l'axe central de rotation que les trous de goutte-à-goutte (72A, 74A) dans des positions plus profondes de ladite surface inférieure.

5. Appareil pour la production de boissons selon l'une quelconque des revendications 1 à 4, dans lequel les diamètres desdits trous de goutte-à-goutte (72A, 74A) dans des positions plus profondes de ladite surface inférieure sont plus petits que les diamètres des trous de goutte-à-goutte (72A, 74A) dans des positions moins profondes.

6. Appareil pour la production de boissons selon la revendication 1 ou 2, dans lequel la profondeur de ladite surface inférieure dudit diffuseur (70) varie sensiblement selon une forme en spirale centrée sur l'axe central de rotation.

7. Appareil pour la production de boissons selon la revendication 1 ou 2, dans lequel une pluralité de parties annulaires de profondeurs différentes est prévue de façon sensiblement concentrique dans ladite surface inférieure dudit diffuseur (70) et centrée sur l'axe central de rotation.

8. Appareil pour la production de boissons selon la revendication 7, dans lequel un orifice d'écoulement d'eau chaude dudit appareil pour la production de boissons est prévu au-dessus d'une partie annulaire la plus profonde dudit diffuseur (70) rotatif, et de l'eau chaude provenant dudit orifice d'écoulement d'eau chaude est versée dans ladite partie annulaire la plus profonde.
